# EUROPÄISCHE PATENTSCHRIFT

(11) **EP 3 157 727 B1**
(45) Veröffentlichungstag und Bekanntmachung des Hinweises auf die Patenterteilung: **15.08.2018**
(21) Anmeldenummer: 15730157.3
(22) Anmeldetag: 19.06.2015
(51) Int. Cl.: B29C 45/76

(54) **VERFAHREN ZUM BETREIBEN EINER SPRITZGIESSMASCHINE**
METHOD FOR OPERATING AN INJECTION-MOULDING MACHINE
PROCÉDÉ POUR FAIRE FONCTIONNER UNE MACHINE DE MOULAGE PAR INJECTION

(30) Priorität: 23.06.2014 DE 102014108730
(43) Veröffentlichungstag der Anmeldung: 26.04.2017
(73) Patentinhaber: Netstal-Maschinen AG, 8752 Näfels (CH)
(72) Erfinder: SCHMIDHEINY, Eric, 76547 Sinzheim (CH); HAUSAMMANN, Manuel, CH-9500 Wil (CH)
(74) Vertreter: Wilhelm, Ludwig
(86) Internationale Anmeldenummer: PCT/EP2015/063792
(87) Internationale Veröffentlichungsnummer: WO 2015/197480

(56) Entgegenhaltungen:
- AT-B1- 502 382
- DE-A1- 3 032 407
- US-A- 6 144 182
- US-A1- 2010 112 113

## Beschreibung

Die Erfindung betrifft ein Verfahren zum Betreiben einer Spritzgießmaschine gemäß dem Oberbegriff von Anspruch 1.

Es ist bekannt, die Sollwertvorgabe des Antriebs einer elektrisch oder hydraulisch angetriebenen Schliesseinheit einer Spritzgießmaschine so zu parametrieren, dass das maximal zulässige Gewicht eines Formwerkzeugs mit dem maximalen Hub mit der installierten Leistung bewegt werden kann. Dadurch ergeben sich vor allem beim Einsatz von leichten Werkzeugen und kleinen Hüben Leistungsreserven am Antrieb, die heute ungenutzt bleiben.

Das Dokument EP1346812B1 offenbart ein Verfahren zur energieorientierten Optimierung von zyklisch ablaufenden Maschinenprozessen, insbesondere von Spritzgießprozessen auf Spritzgießmaschinen zur Verarbeitung von Kunststoffen. Durch eine Optimierung verschiedener Einstellparameter soll ein geringerer Energieverbrauch erreicht werden. Hierzu wird bei gegebenen Prozesseinstellgrößen und Istwerten zusätzlich an der Maschine eine mehr oder minder differenzierte Effektiv-Leistungsmessung in Echtzeit während des laufenden zyklischen Prozesses an der Maschine durchgeführt und deren Ergebnisse der Steuerung der Maschine zur weiteren Verarbeitung über eine analoge oder digitale Schnittstelle zur Verfügung gestellt.

Das Dokument AT502382B1 offenbart ein Verfahren zum Steuern und/oder Regeln einer Spritzgießmaschine, die einen Kniehebelmechanismus mit Kreuzkopf aufweist. Es werden Restriktionsgrößen für die Bewegung der beweglichen Formaufspannplatte sowie Restriktionsgrößen für die Bewegung des Kreuzkopfes festgelegt. Abschließend wird eine zeitoptimale Bewegungstrajektorie numerisch berechnet und abgespeichert. Anschließend erfolgt das Steuern und/oder Regeln der Antriebsvorrichtung der Spritzgießmaschine entlang der gespeicherten Bewegungstrajektorie. Dieses Verfahren ist auch beschrieben in der Zeitschrift "Kunststoffe 7/2008", Seiten 50 bis 53, Carl Hanser Verlag München in dem Artikel mit dem Titel "Die intelligenten Sprinter". Dort ist ausgeführt (Seite 52, linke Spalte), dass das als "Active Speed Setup" bezeichnete Verfahren auf einem mathematischen Modell aufbaut, in dem alle physikalischen Einflussgrößen wie Ruck, Beschleunigung und Geschwindigkeit als Ausgangsbasis zur Berechnung von Stellgrößen für die Regelung des Antriebssystems verwendet werden. In einem ersten Schritt wird unter Berücksichtigung dieser Einflussgrößen die günstigste Sollbewegung (Trajektorie) für den Kniehebel berechnet. In einem zweiten Schritt wird die Ist-Bewegung des Kniehebels mit geeigneten Regelungskonzepten an die berechnete zeitoptimale Sollbewegung herangeführt.

Ausgehend von dem vorgenannten Stand der Technik liegt der Erfindung die Aufgabe zugrunde, ein Verfahren zum Betreiben einer Spritzgießmaschine anzugeben, mit welchem die Bewegungszeiten von beweglichen Maschinenteilen, insbesondere der beweglichen Formaufspannplatte, minimiert werden können.

Zur Lösung dieser Aufgabe wird erfindungsgemäß vorgeschlagen, für eines oder mehrere der beweglichen Maschinenteile die Leistungsreserven von einem oder mehreren der einem beweglichen Maschinenteil zugeordneten Antriebe sukzessive zu reduzieren, bis ein vorgebbares Minimum an Leistungsreserve erreicht ist, wobei das Minimum vorzugsweise nahe bei oder gleich Null ist. Vorzugsweise kann das Minimum kleiner als 10% der maximal verfügbaren Leistung, besonders bevorzugt kleiner als 5% der maximal verfügbaren Leistung sein. Das Minimum kann aber auch gleich Null sein. Im Idealfall wird am Ende des Optimierungsprozesses der Antrieb eines bestimmten beweglichen Maschinenteils mit der maximal zur Verfügung stehenden Leistung betrieben. Falls mehrere Antriebe an ein- und demselben Maschinenteil vorgesehen sind, gilt dies vorzugsweise für alle Antriebe bzw. für jeden der Antriebe wird die jeweilige Leistungsreserve entsprechend reduziert. Andere Gesichtspunkte wie zum Beispiel der Energieverbrauch bleiben hierbei unberücksichtigt.

Gemäß einer bevorzugten Ausführungsform werden in jedem Zyklus die Leistungsreserven des oder der Antriebe ermittelt und sukzessive, insbesondere von Zyklus zu Zyklus, werden die Leistungsreserven reduziert. Die Reduzierung der Leistungsreserven kann also über mehrere Zyklen erfolgen. Dabei soll vorzugsweise eine zyklusübergreifende Annäherung an das Leistungsmaximum des Antriebs erfolgen bzw. es soll zyklusübergreifend die in einem konkreten Anwendungsfall vorliegende Leistungsreserve minimiert werden, gegebenenfalls bis keine Leistungsreserven mehr vorhanden sind.

Es können auch andere Zeitabstände für die Ermittlung der Leistungsreserven vorgegeben werden als ein Zyklus. Demzufolge ist es auch möglich, die Leistungsreserven nur in jedem zweiten, dritten, vierten, ... Zyklus zu ermitteln. Ebenso ist es möglich, die Leistungsreserven in anderen regelmäßigen oder auch in unregelmäßigen Zeitabständen zu ermitteln. Denkbar wäre zum Beispiel, die Leistungsreserven nach dem ersten Zyklus, nach dem dritten Zyklus, nach dem vierten Zyklus, nach dem sechsten Zyklus, nach dem siebenten Zyklus, usw. zu ermitteln. Dies ergäbe folgende Reihe, wobei Z den Zyklus und LR den Schritt der Ermittlung der Leistungsreserve bedeuten sollen: Z1-LR-Z2-Z3-LR-Z4-LR-Z5-Z6-LR-Z7-LR-... Allgemein gesagt werden die Leistungsreserven von Zeit zu Zeit bzw. zu bestimmten vorgebbaren Zeitpunkten ermittelt.

Die Leistungsreserven sollten sinnvollerweise immer nach Erreichen des gleichen Zeitpunkts innerhalb eines Zyklus ermittelt werden. Vorzugsweise werden die Leistungsreserven am Ende eines Zyklus bzw. nach Erreichen des Zeitpunkts ermittelt, welcher dem Ende eines Zyklus entspricht. Dies kann beispielsweise der Zeitpunkt sein, wenn eine Bewegung beendet ist. Es kann aber auch auf einen bestimmten Zeitpunkt im Verlaufe eines Zyklus abgestellt werden.

Alternativ kann als Zeitpunkt für das Ermitteln der Leistungsreserven auch das Erreichen eines bestimmten Zustandes eines beweglichen Maschinenteils hergenommen werden, beispielsweise der Zustand, wie er vorliegt, wenn ein Ende eines gewünschten Verfahrweges eines beweglichen Maschinenteils erreicht worden ist. Durch das Abstellen auf einen bestimmten Zustand des Maschinenteils vermeidet man Probleme, wenn man auf einen Zeitpunkt im Zyklus abstellt und die Zykluszeit Schwankungen unterliegt. Als Zustand kann das Erreichen einer bestimmten Position auf dem Verfahrweg verstanden werden wie beispielsweise oben erwähnt das Erreichen eines Endes eines Verfahrweges. Als "Zustand des beweglichen Maschinenteils" kann aber nicht nur das Erreichen einer bestimmten Position verstanden werden, sondern als "Zustand des beweglichen Maschinenteils" können auch andere Situationen verstanden werden, in denen sich das zu betrachtende Maschinenteil befindet. Beispielsweise könnte als "Zustand des beweglichen Maschinenteils" angesehen und so verstanden werden, wenn sich das bewegliche Maschinenteil in einem Zustand befindet, in welchem die Schließeinheit zugehalten wird und ein bestimmter Wert an Schließkraft aufgebaut worden ist.

Um möglichst rasch die Leistungsreserven zu minimieren, ist eine Reduzierung der Leistungsreserven beginnend nach dem ersten Zyklus und fortdauernd von Zyklus zu Zyklus bis zu einem vorgebbaren Minimum sinnvoll. Dies setzt natürlich auch eine entsprechende Ermittlung der Leistungsreserven von Zyklus zu Zyklus voraus. Es ist aber auch möglich, die Reduzierung der Leistungsreserven nicht nach jedem Zyklus vorzunehmen, sondern in anderen regelmäßigen oder auch unregelmäßigen Zeitabständen. Dabei ist es natürlich erforderlich, dass jeweils vor einer Reduzierung der Leistungsreserven eine Ermittlung der dann noch vorhandenen Leistungsreserven vorgenommen wird.

Die Leistungsreserven von einem oder mehreren der einem beweglichen Maschinenteil zugeordneten Antriebe werden also von Zeit zu Zeit ermittelt und sukzessive reduziert, bis ein vorgebbaren Minimum an Leistungsreserve erreicht ist.

Sind mehrere Antriebe einem beweglichen Maschinenteil zugeordnet, sind verschiedene Ausführungsformen des erfindungsgemäßen Verfahrens möglich. Gemäß einer Ausführungsform können die individuellen Leistungsreserven ermittelt und einzeln betrachtet werden. In diesem Fall könnten die Leistungsreserven der einzelnen Antriebe unabhängig voneinander ermittelt und sukzessive reduziert werden. Dabei kann man für jeden Antrieb das gleiche Minimum an Leistungsreserve vorgeben oder es kann individuell für jeden Antrieb ein eigenes, individuelles Minimum an Leistungsreserve vorgegeben werden. Gemäß einer anderen Ausführungsform ist es möglich, eine Summe aus den Leistungsreserven der einzelnen Antriebe zu bilden und diese Summe sukzessive zu reduzieren, bis ein vorgebbares Minimum bezogen auf diese Summe der Leistungsreserven erreicht worden ist. Man kann auch sagen, dass in diesem Fall ein Gesamtminimum vorgegeben wird. Gegebenenfalls können auch Mischformen der vorgenannten Ausführungsformen in Betracht kommen. Wenn mehr als zwei Antriebe für das Verfahren eines beweglichen Maschinenteils vorgesehen sind, könnte beispielsweise für einen Antrieb die erste vorgenannte Ausführungsform und für die anderen Antriebe die zweite der vorgenannten Ausführungsformen zum Einsatz kommen. Falls mehrere Antriebe auf ein bewegliches Maschinenteil einwirken bzw. dieses antreiben und entlang eines Verfahrweges verfahren sollen, können geeignete Getriebe vorgesehen werden, um die Wirkverbindung der mehreren Antriebe mit dem Maschinenteil und gegebenenfalls zwischen den Antrieben untereinander zu realisieren. Je nach Regelung der Achsen bzw. der beweglichen Maschinenteile können verschiedenen Varianten des erfindungsgemäßen Verfahrens realisiert werden. Insbesondere können je nach Anzahl der für ein bewegliches Maschinenteil vorgesehenen und auf dieses Maschinenteil einzuwirkenden Antriebe unterschiedliche Kombinationen der vorgenannten Ausführungsformen zum Einsatz kommen.

Die Ermittlung der Leistungsreserven kann bevorzugt in der Weise erfolgen, dass während der Bewegung des Maschinenteils entlang eines vorgegebenen Verfahrwegs fortlaufend eine oder mehrere physikalische Größen gemessen werden, welche für die Bestimmung der Leistung des oder der Antriebe geeignet sind. Zur Erzielung einer Vielzahl von Messwerten kann die Messung in kurzen Zeitabständen erfolgen, beispielsweise im Millisekundentakt.

Gemäß einer weiteren Ausführungsform können am Ende des Verfahrweges die Messwerte ausgewertet und eine Berechnung der Leistungsreserven für die entlang dieses Verfahrweges ausgeführte Bewegung erfolgen. Damit können - sofern Leistungsreserven ermittelt worden sind - für die Durchführung der Bewegung in einem späteren Zyklus, insbesondere im nächsten Zyklus, die Leistungsreserven reduziert werden bzw. eine größere Leistung zum Verfahren des Maschinenteils zur Verfügung gestellt wird. Die Leistungsreserven können soweit reduziert werden, bis die maximal zur Verfügung stehende Leistung eines Antriebs zum Verfahren des Maschinenteils hergenommen wird.

Die Erfindung ist sowohl für elektrische Spritzgießmaschinen wie auch für hydraulische Spritzgießmaschinen geeignet. Demzufolge können ein oder mehrere elektrische Antriebe oder ein oder mehrere hydraulische Antriebe vorgesehen sein, um ein zu verfahrendes Maschinenteil wie z.B. eine Formaufspannplatte oder einen Auswerfer zu bewegen. Grundsätzlich denkbar sind aber auch Mischformen, d.h. die Verwendung von elektrischen und von hydraulischen Antrieben.

Ein bevorzugtes Anwendungsgebiet ist das Verfahren der beweglichen Formaufspannplatte. Demzufolge kann vorliegend als ein bewegliches Maschinenteil die bewegliche Formaufspannplatte angesehen werden. Die bewegliche Formaufspannplatte wird mit dem darauf befindlichen Formenteil eines Spritzgießwerkzeugs entlang eines vorgebbaren Verfahrweges bzw. Hubs zyklisch auf die feststehende Formaufspannplatte zu und von dieser weg bewegt. Die Leistungsreserve des oder der Antriebe der beweglichen Formaufspannplatte kann am Ende des Zufahrens und/oder am Ende des Auffahrens ermittelt werden. Für einen vorgegebenen Verfahrweg wird vorzugsweise zunächst ein Verlauf eines Geschwindigkeitssollwertes vorgegeben und der Verlauf des Geschwindigkeitssollwertes entsprechend den zur Verfügung stehenden Leistungsreserven sukzessive verändert, und zwar in der Weise, dass die Zeit für das Zurücklegen des Verfahrwegs sukzessive reduziert wird.

Ein Kerngedanke der Erfindung liegt somit darin, für jeden Anwendungsfall einer Schließeinheit einer Spritzgießmaschine die Bewegungszeiten der beweglichen Formaufspannplatte so weit wie möglich zu reduzieren. Der Anwendungsfall ist durch das Spritzgießwerkzeug und dessen Betrieb vorgegeben. Dies bedeutet, dass das Werkzeug ein bestimmtes Gewicht hat und über einen bestimmten Verfahrweg bzw. Hub auf- und zugefahren wird. Für ein bestimmtes Werkzeuggewicht und einen bestimmten Hub bzw. Verfahrweg kann mittels der Erfindung die kürzestmöglichste Verfahrzeit der beweglichen Formaufspannplatte erzielt werden, und zwar vorzugsweise sowohl für das Zufahren wie für das Auffahren. Hierzu wird erfindungsgemäß vorgesehen, die Leistungsreserven des Antriebs der beweglichen Formaufspannplatte für einen bestimmten Anwendungsfall zu ermitteln und zu minimieren. Insbesondere bei der Verwendung von relativ leichten Spritzgießwerkzeugen und bei kleinen Hüben bzw. kurzen Verfahrwegen ergeben sich Leistungsreserven, die ausgenutzt werden können.

Die Erfindung ist auf das Verfahren der beweglichen Formaufspannplatte beschränkt. In analoger, aber nicht erfindungsgemäßer Weise kann auch das Verfahren eines Auswerfers, eines Kernzugs, einer Plastifizierschnecke und/oder eines Spritzkolbens optimiert werden. Auch für diese bewegbaren Maschinenteile kann, nicht erfindungsgemäß, zunächst ein Verlauf eines Geschwindigkeitssollwertes vorgegeben und der Verlauf des Geschwindigkeitssollwertes entsprechend den zur Verfügung stehenden Leistungsreserven sukzessive verändert, und zwar in der Weise, dass die Zeit für das Zurücklegen des jeweiligen Verfahrwegs sukzessive reduziert wird. Der Geschwindigkeitssollwert kann durch Integration über die Zeit zu einem Positionssollwert verarbeitet werden, womit das bewegliche Maschinenteil positionsgeregelt betrieben werden kann.

Das Verfahren kann vorzugsweise entlang einer Achse erfolgen, d.h. auf einem linearen Verfahrweg. Weiterhin kann vorzugsweise am Ende der Vorwärtsbewegung und/oder am Ende der Rückwärtsbewegung die Leistungsreserve ermittelt werden.

Nachfolgend soll die Erfindung anhand von Ausführungsbeispielen und unter Bezugnahme auf die Figuren 1 bis 4 näher beschrieben werden. Es zeigen:
- Figur 1:: eine schematische Darstellung einer elektrischen Spritzgießmaschine mit einem elektrischen Antrieb.
- Figur 2:: eine schematische Darstellung einer hydraulischen Spritzgießmaschine mit einem hydraulischen Antrieb
- Figur 3:: ein Ablaufdiagramm für das erfindungsgemäße Verfahren
- Figur 4a, 4b:: verschiedene Fahrprofile für verschiedene Leistungsreserven mit Darstellung des jeweiligen Geschwindigkeitssollwertverlaufs in Figur 4a und Darstellung des jeweiligen Positionssollwertverlaufs in Figur 4b.

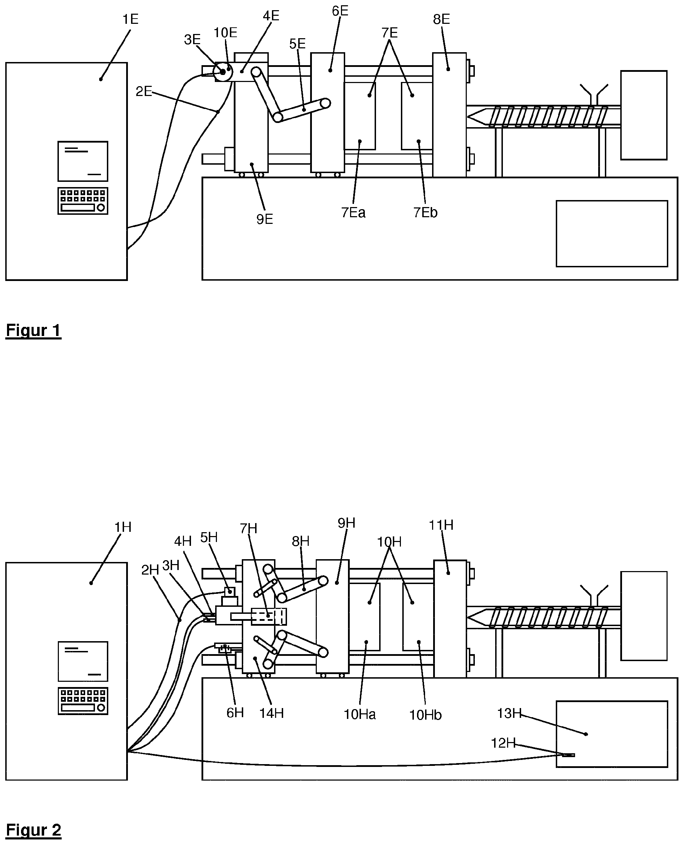

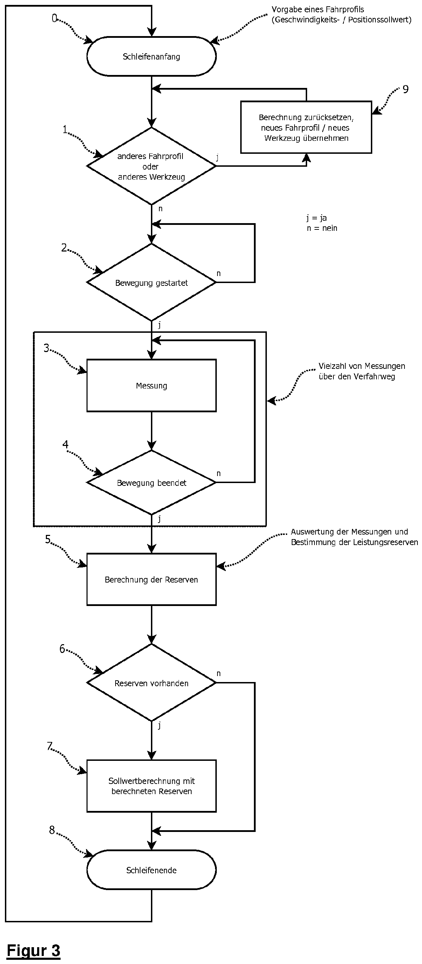

Die Figur 1 zeigt eine Ausführungsform einer elektrischen Spritzgießmaschine mit einer Kniehebel-Schließeinheit. Auf einem Maschinenbett sind eine feststehende Formaufspannplatte 8E, eine bewegliche Formaufspannplatte 6E und eine Abstützplatte 9E angeordnet. Die Abstützplatte 9E ist für Zwecke der Formhöhenverstellung ebenfalls verschieblich auf dem Maschinenbett gelagert. Ein Spritzgießwerkzeug 7E umfasst Formhälften 7Ea und 7Eb, wobei die eine Formhälfte, nämlich die bewegliche Formhälfte 7Ea, auf der beweglichen Formaufspannplatte 6E und die andere, feststehende Formhälfte 7Eb auf der feststehenden Formaufspannplatte befestigt sind. Zwischen der Abstützplatte 9E und der beweglichen Formaufspannplatte 6E ist ein Kniehebelsystem 5E vorgesehen. Ein Elektromotor 4E dient zum Betätigen des Kniehebelsystems. Elektromotorisch angetriebene Kniehebelsysteme sind dem Fachmann in verschiedenen Ausgestaltungen bekannt, so dass hier keine weiteren Erläuterungen erforderlich sind. Insbesondere sind dem Fachmann die konstruktiven Einzelheiten eines Kniehebelsystems sowie die Art und Weise bekannt, wie der Elektromotor 4E mit dem Kniehebelsystem antriebstechnisch verbunden ist, um diesen von einer zusammengeklappten Stellung, welcher einer Offenstellung der Schließeinheit entspricht, in eine gestreckte Stellung zu verfahren, welcher einer Geschlossenstellung der Schließeinheit entspricht und umkehrt. An dem Elektromotor 4E sind ein Drehgeber 3E und ein Strommessgerät 10E vorgesehen. Über den Drehgeber 3E kann die aktuelle Drehzahl n ermittelt werden, das Strommessgerät 10E misst die aktuelle Stromstärke I. Die Drehzahl n und die Stromstärke I werden einer Maschinensteuerung 1E zugeführt und dort ausgewertet, was weiter unten im Zusammenhang mit der Figur 3 näher beschrieben wird. Über eine Leitung 2E wird der Elektromotor 4E mit Steuersignalen von der Maschinensteuerung 1E versorgt.

Die in der Figur 2 gezeigte hydraulische Spritzgießmaschine ist ebenfalls mit einer Drei-Platten-Schließeinheit mit Kniehebelsystem ausgestattet. Sie umfasst eine feststehende Formaufspannplatte 11H mit einer Formhälfte 10Hb, eine bewegliche Formaufspannplatte 9H mit einer beweglichen Formhälfte 10Ha, eine Abstützplatte 14H und ein Kniehebelsystem 8H zwischen Abstützplatte und beweglicher Formaufspannplatte. Die Betätigung des Kniehebelsystems 8H erfolgt mittels eines Hydraulikzylinders 7H, welcher mittels geeigneter hier nicht dargestellter Hydraulikleitungen mit einem hydraulischen Antrieb 13H verbunden ist, welcher einen Drucksensor 12H aufweist. Die Versorgung des Hydraulikzylinders mit einem Druckmittel, insbesondere mit Hydrauliköl, erfolgt über ein Proportionalventil 5H, welches von der Maschinensteuerung 1H über eine Steuerleitung 2H angesteuert werden kann. Des Weiteren sind Drucksensoren 3H und 4H für die beidseits des Kolbens liegenden Kammern des Hydraulikzylinders vorgesehen. Ferner ist dem Hydraulikzylinder 7H ein Wegmesssystem 6H zugeordnet, um den Verfahrweg des Kolbens und/oder der Kolbenstange und damit letztendlich den Verfahrweg der beweglichen Formaufspannplatte messen zu können. Auch im Falle von hydraulischen Spritzgießmaschinen sind dem Fachmann die konstruktiven Einzelheiten eines Kniehebelsystems sowie die Art und Weise bekannt, wie der Zylinder 7H mit dem Kniehebelsystem antriebstechnisch verbunden ist, so dass an dieser Stelle eine nähere diesbezügliche Beschreibung nicht erforderlich ist.

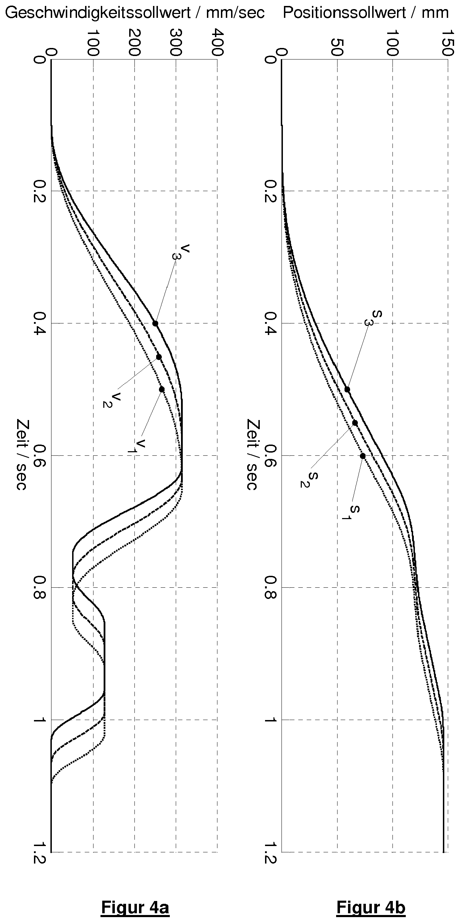

Anhand der Figuren 3, 4a und 4b soll nun das erfindungsgemäße Verfahren näher erläutert werden. Zum Schleifenanfang (Bezugszeichen bzw. Schritt 0) wird ein bestimmter Verlauf eines Geschwindigkeitssollwerts für einen bestimmten Verfahrweg beim Zufahren bzw. für einen bestimmten Hub der beweglichen Formaufspannplatte vorgegeben, beispielsweise die Kurve v₁ in der Figur 4a. In dem Beispiel soll der Hub bzw. Verfahrweg der beweglichen Formaufspannplatte 150mm betragen. Die Geschwindigkeit v₁ nimmt zunächst zu, dann wird sie gedrosselt, wenn der Kontakt der Formhälften des Spritzgießwerkzeugs zu erwarten ist; danach erfolgt das Verriegeln der Schließeinheit mit einer kurzen Beschleunigungsphase, bis die Geschwindigkeit v₁ am Ende des Verfahrwegs auf Null abfällt. Beim Geschwindigkeitsverlauf v₁ ergibt sich ein Positionssollwertverlauf gemäß der Kurve s₁ in der Figur 4b. Geschwindigkeitsverlauf v₁ und Positionsverlauf s₁ bilden zusammen ein vorgegebenes Fahrprofil für den Schleifenanfang 0.

Im nächsten Schritt (1) wird überprüft, ob die Schließeinheit mit einem anderen Fahrprofil betrieben werden soll, beispielsweise weil ein anderes Spritzgießwerkzeug mit einem anderen Verfahrweg bzw. einem anderen Hub verwendet wird. Ist dies nicht der Fall, wird die Schließenbewegung gestartet (2), d.h. die bewegliche Formaufspannplatte wird gemäß der Kurve v₁ zugefahren. Im 1 ms - Takt erfolgt die Messung (Schritt 3) derjenigen Grössen, die für die Berechnung der Leistungsreserven benötigt werden. Im Falle eines elektrischen Antriebs (Figur 1, Bezugszeichen 4E) werden also im 1ms-Takt die Stromstärke I (= Maß für das Drehmoment) und die Drehzahl n gemessen.

Im Schritt 4 wird geprüft, ob die Bewegung beendet ist, d.h. ob die Schließeinheit zugefahren ist. Solange die bewegliche Formaufspannplatte und damit die bewegliche Formhälfte des Spritzgießwerkzeugs verfahren werden, ist dies natürlich noch nicht der Fall und die Schritte 3 und 4 werden wiederholt. Aufgrund der kurzen Abtastzeit von 1 ms werden die Schritte 3 und 4 in der Regel mehrere hundert bis mehrere tausend mal wiederholt, je nachdem wie viele Sekunden die bewegliche Formaufspannplatte benötigt, um den gewünschten Hub (hier 150mm) zurückzulegen.

Wenn die Bewegung beendet ist und das Ende des Verfahrweges erreicht ist (d.h. das Formwerkzeug hat den gewünschten Hub zurückgelegt), erfolgt im nächsten Schritt (5) die Berechnung der Leistungsreserven. Hierzu wird zunächst das bei diesem Bewegungsablauf erzielte Leistungsmaximum Pₘₐₓ₋ₐₖₜᵤₑₗₗ ermittelt und mit der maximal möglichen bzw. vorhandenen Leistung Pmax-vorhanden des Antriebs verglichen. Die Differenz ergibt die aktuelle Leistungsreserve Pᵣₑₛ. Im Falle eines elektrischen Antriebs wird also der Verlauf des Produkts I(Stromstärke) x n(Drehzahl) x Drehmomentkonstante berechnet und das Maximum dieses Produkts bestimmt. Durch Differenzbildung mit der maximal vorhandenen bzw. abrufbaren Leistung des Antriebs (Pmax-vorhanden - Pₘₐₓ₋ₐₖₜᵤₑₗₗ) erhält man die für diese Schließfahrt der beweglichen Formaufspannplatte "übriggebliebene" Leistungsreserve Pᵣₑₛ. Ist eine solche Leistungsreserve ermittelt worden, d.h. sind Reserven Pᵣₑₛ. vorhanden (Schritt 6) kann ein neues Fahrprofil bestimmt werden, d.h. im Schritt 7 erfolgt eine neue Sollwertberechnung für einen Geschwindigkeitsverlauf unter Berücksichtigung der Leistungsreserven und von dort geht es an den Schleifenanfang (Schritt 0) zurück. Man kann die gesamten berechneten Leistungsreserven auf einmal oder nur einen Teil der Leistungsreserven für die neue Sollwertberechnung zugrunde legen. Vorzugsweise wird nur ein Teil der Leistungsreserven für die neue Sollwertberechnung verwendet, so dass im nächsten Zyklus erneut eine diesmal etwas kleinere Leistungsreserve ermittelt wird. Von dieser dann noch vorhandenen Leistungsreserve kann erneut ein Teil für die neue Sollwertberechnung verwendet werden, so dass im nächsten Zyklus möglicherweise wieder eine - diesmal noch kleinere - Leistungsreserve ermittelt wird. Es kann also von Zyklus zu Zyklus die Leistungsreserve ermittelt und reduziert werden, bis ein vorgebbares Minimum erreicht ist. Vorzugsweise liegt das Minimum nahe oder bei Null, d.h. im optimalen Zustand sind praktisch keine Leistungsreserven mehr vorhanden. Dies bedeutet, dass die maximal zur Verfügung stehende Leistung des Antriebs ausgenutzt wird und infolgedessen auch die Bewegungszeit der beweglichen Formaufspannplatte minimal geworden ist.

Wenn man sich die Kurven v₁ bis v₃ bzw. s₁ bis s₃ in den Fahrprofilen anschaut (siehe Figuren 4a, 4b), würde die erste Bewegung der beweglichen Formaufspannplatte im Schritt 5 eine Leistungsreserve von 30% ergeben. Bei Schritt 7 könnte man dann einen neuen Geschwindigkeitssollwertverlauf gemäß der Kurve v₂ vorgeben und zum Schleifenanfang (Schritt 0) zurückkehren. Bei erneutem Erreichen des Schritts 5 würde die Berechnung eine neue Leistungsreserve Pᵣₑₛ. von nur noch 20% ergeben. Die Endposition 150mm (d.h. der geschlossene Zustand des Formwerkzeugs) ist in diesem Fall zu einem früheren Zeitpunkt erreicht (s₂). Im Schritt 7 könnte man nun einen neuen Geschwindigkeitssollwertverlauf gemäß der Kurve v₃ vorgeben und zum Schleifenanfang zurückkehren usw. Je nachdem in welchem Maße die Leistungsreserven Pᵣₑₛ von Zyklus zu Zyklus reduziert werden, wird im Schritt 6 früher oder später erkannt, dass keine Leistungsreserven mehr vorhanden sind. Für den aktuellen Anwendungsfall ist die schnellstmöglichste Bewegung der beweglichen Formaufspannplatte erreicht worden. In der Figur 4b sieht man, wie durch die Reduzierung der Leistungsreserven das Erreichen des Hubweges um etwa eine Zehntel-Sekunde früher erfolgt (das Ende verschiebt sich in der Figur 4b von rechts (s₁) nach links (s₃). Im Ergebnis wird somit die Bewegungszeit für einen bestimmten Anwendungsfall auf ein Minimum reduziert.

Wird zu einem späteren Zeitpunkt ein neues Spritzgießwerkzeug eingebaut oder ein anderes Fahrprofil vorgegeben, wird die Berechnung zurückgesetzt (Schritt 9) und ein neuer Optimierungsalgorithmus wird gestartet.

Die Erfindung kann sowohl für elektrische als auch für hydraulische Antriebe verwendet werden.

Bei einem elektrischen Antrieb werden wie oben beschrieben die Drehzahl und das Drehmoment (resp. die Stromstärke) gemessen, aus dem Produkt die Leistung bestimmt und das Maximum der Leistung in einem Zyklus bestimmt. Bei einem hydraulischen Antrieb werden der Druck in einer der Zylinderkammern, vorzugsweise der Druck in beiden Zylinderkammern, der Speicherdruck und die Verfahrgeschwindigkeit des Kolbens gemessen.

Ein wesentlicher Vorteil der Erfindung liegt in einer Verkürzung der Zykluszeit und damit einer Erhöhung des Maschinenoutputs. Das Potential ist vor allem bei Kleinhubanwendungen gross, denn bei diesen Anwendungen wird prozentual gesehen ein beachtlicher Anteil der Zykluszeit für das Schliessen und Öffnen des Werkzeuges verwendet. Bei diesen Anwendungen sind heute die grössten Leistungsreserven am Antrieb vorhanden.

Die Erfindung ist auf das Verfahren der beweglichen Formaufspannplatte beschränkt. Analog, aber nicht erfindungsgemäß, könnte auch das Verfahren eines Auswerfers, eines Kernzugs, einer Plastifizierschnecke und/oder eines Spritzkolbens optimiert werden. Grundsätzlich, nicht erfindungsgemäß, ist das Verfahren auf alle beweglichen Maschinenteile anwendbar, die entlang von Verfahrwegen zyklisch vor und zurück verfahren werden. Daher könnte auch eine Handling- oder Roboterachse entsprechend optimiert werden.

Wird die Leistungsreserve wie vorliegend mithilfe einer Messgrösse, z.B. dem Motorstrom oder der Kolbenkraft ermittelt, können zudem temperaturabhängige Phänomene wie beispielsweise die Reibung oder die Ölkompressibilität mitberücksichtigt werden.

Das erfindungsgemäße Verfahren ist nicht auf den Betrieb von Spritzgießmaschinen mit einer Kniehebel-Schließeinheit beschränkt, sondern kann bei allen Arten von Schließeinheiten eingesetzt werden.

### Bezugszeichenliste

### Elektrische Spritzgießmaschine - Figur 1

- 1E: Maschinensteuerung mit Umrichter
- 2E: Ansteuerung Elektromotor
- 3E: Drehgeber
- 4E: Elektromotor
- 5E: Kniehebelsystem
- 6E: bewegliche Formaufspannplatte
- 7E: Spritzgießwerkzeug
- 7Ea: bewegliche Formhälfte
- 7Eb: feststehende Formhälfte
- 8E: feststehende Formaufspannplatte
- 9E: Abstützplatte
- 10E: Strommessgerät

### Hydraulische Spritzgießmaschine - Figur 2

- 1H: Maschinensteuerung
- 2H: Ansteuerung Proportionalventil
- 3H: Drucksensor Kammer A
- 4H: Drucksensor Kammer B
- 5H: Proportionalventil
- 6H: Wegmesssystem Hydraulikzylinder
- 7H: Hydraulikzylinder
- 8H: Kniehebelsystem
- 9H: bewegliche Aufspannplatte
- 10H: Spritzgießwerkzeug
- 10Ha: bewegliche Formhälfte
- 10Hb: feststehende Formhälfte
- 11H: düsenseitige Aufspannplatte
- 12H: Drucksensor hydraulischer Speicher
- 13H: hydraulischer Antrieb / hydraulischer Speicher
- 14H: Abstützplatte

## Patentansprüche

1. Verfahren zum Betreiben einer Spritzgießmaschine, welche eine oder mehrere bewegliche Maschinenteile aufweist, die mittels geeigneter Antriebe entlang von vorgebbaren Verfahrwegen verfahren werden können, wobei das Verfahren eines beweglichen Maschinenteils zyklisch wiederholt wird, wobei ein bewegliches Maschinenteil die bewegliche Formaufspannplatte ist, wobei auf der beweglichen Formaufspannplatte ein Formenteil eines Spritzgießwerkzeugs vorgesehen ist, und wobei die bewegliche Formaufspannplatte mit dem darauf befindlichen Formenteil entlang eines vorgebbaren Verfahrweges zyklisch auf die feststehende Formaufspannplatte zu und von dieser weg bewegt wird,
**dadurch gekennzeichnet, dass**
am Ende des Zufahrens und/oder am Ende des Auffahrens die Leistungsreserven von einem oder mehreren der der beweglichen Formaufspannplatte zugeordneten Antriebe von Zeit zu Zeit ermittelt und sukzessive reduziert werden, bis ein vorgebbares Minimum an Leistungsreserve für diesen Antrieb oder diese Antriebe erreicht worden ist, wobei für einen vorgegebenen Verfahrweg zunächst ein Verlauf eines Geschwindigkeitssollwertes vorgegeben wird, und dass der Verlauf des Geschwindigkeitssollwertes entsprechend den zur Verfügung stehenden Leistungsreserven sukzessive verändert wird, und zwar in der Weise, dass die Zeit für das Zurücklegen des Verfahrwegs sukzessive reduziert wird, so dass für jeden Anwendungsfall der Schließeinheit der Spritzgießmaschine die Bewegungszeiten der beweglichen Formaufspannplatte so weit wie möglich reduziert werden, wobei der Anwendungsfall durch ein bestimmtes Gewicht des Spritzgießwerkzeugs bzw. des auf der beweglichen Formaufspannplatte befindlichen Formenteils des Spritzgießwerkzeugs und einen bestimmten Verfahrweg für dieses Formenteil vorgegeben ist.

2. Verfahren nach Anspruch 1,
**dadurch gekennzeichnet, dass**
das Minimum nahe bei Null ist, vorzugsweise kleiner als 10% der maximal verfügbaren Leistung, besonders bevorzugt kleiner als 5% der maximal verfügbaren Leistung, oder dass das Minimum gleich Null ist.

3. Verfahren nach Anspruch 1 oder 2,
**dadurch gekennzeichnet, dass**
in jedem Zyklus die Leistungsreserven des oder der Antriebe ermittelt und sukzessive, insbesondere von Zyklus zu Zyklus, reduziert werden.

4. Verfahren nach einem der vorstehenden Ansprüche,
**dadurch gekennzeichnet, dass**
während der Bewegung des Maschinenteils entlang eines vorgegebenen Verfahrwegs fortlaufend eine oder mehrere physikalische Größen gemessen werden, welche für die Bestimmung der Leistung des oder der Antriebe geeignet sind, wobei die Messung vorzugsweise in kurzen Zeitabständen zur Erzielung einer Vielzahl von Messwerten erfolgt.

5. Verfahren nach Anspruch 4,
**dadurch gekennzeichnet, dass**
am Ende des Verfahrweges die Messwerte ausgewertet und eine Berechnung der Leistungsreserven für die entlang dieses Verfahrweges ausgeführte Bewegung erfolgt, und dass für die Durchführung der Bewegung in einem späteren Zyklus, insbesondere im nächsten Zyklus, die Leistungsreserven reduziert werden bzw. eine größere Leistung zum Verfahren des Maschinenteils zur Verfügung gestellt wird.

6. Verfahren nach einem der vorstehenden Ansprüche,
**dadurch gekennzeichnet, dass**
die Leistungsreserven soweit reduziert werden, bis die maximal zur Verfügung stehende Leistung eines Antriebs zum Verfahren des Maschinenteils hergenommen wird.

7. Verfahren nach einem der vorstehenden Ansprüche,
**dadurch gekennzeichnet, dass**
ein oder mehrere elektrische Antriebe verwendet werden und die Stromstärke I sowie die Drehzahl n gemessen wird.

8. Verfahren nach einem der vorstehenden Ansprüche,
**dadurch gekennzeichnet, dass**
ein oder mehrere hydraulische Antriebe verwendet werden und der Druck in einer oder beiden Zylinderkammern und die Verfahrgeschwindigkeit des Kolbens oder der Kolbenstange gemessen wird.

9. Verfahren nach einem der vorstehenden Ansprüche,
**dadurch gekennzeichnet, dass**
die Geschwindigkeitssollwerte von Zyklus zu Zyklus verändert werden.

10. Verfahren nach einem der vorstehenden Ansprüche,
**dadurch gekennzeichnet, dass**
der Geschwindigkeitssollwert zu einem Positionssollwert verarbeitet wird, und dass eine Positionsregelung des beweglichen Maschinenteils erfolgt.

11. Verfahren nach einem der vorstehenden Ansprüche,
**dadurch gekennzeichnet, dass**
die Leistungsreserven von einem oder mehreren Antrieben, die einem beweglichen Maschinenteil zugeordnet sind, ermittelt werden, wenn das bewegliche Maschinenteil einen bestimmten Zustand erreicht hat.

12. Verfahren nach einem der vorstehenden Ansprüche,
**dadurch gekennzeichnet, dass**
mehrere Antriebe einem beweglichen Maschinenteil zugeordnet sind, und dass die Leistungsreserven von einem oder mehreren der einzelnen Antriebe unabhängig voneinander ermittelt und sukzessive reduziert werden.

13. Verfahren nach Anspruch 12,
**dadurch gekennzeichnet, dass**
für jeden Antrieb das gleiche Minimum an Leistungsreserve vorgegeben wird, oder dass individuell für jeden Antrieb ein eigenes individuelles Minimum an Leistungsreserve vorgegeben wird.

14. Verfahren nach einem der vorstehenden Ansprüche,
**dadurch gekennzeichnet, dass**
mehrere Antriebe einem beweglichen Maschinenteil zugeordnet sind, dass eine Summe aus den einzelnen Leistungsreserven von mehreren Antrieben gebildet wird, und dass diese Summe sukzessive reduziert wird, bis ein vorgebbares Minimum bezogen auf diese Summe der Leistungsreserven erreicht worden ist.

## Claims

1. A method for operating an injection-moulding machine, which has one or more movable machine parts, which can be moved by means of suitable drives along predeterminable paths, wherein the movement of a movable machine part is repeated cyclically, wherein a movable machine part is the movable platen, wherein on the movable platen a mould part of an injection-moulding tool is provided, and wherein the movable platen is moved, with the mould part situated thereon, along a predeterminable path cyclically towards the fixed platen and away therefrom,
**characterized in that**
at the end of the closing movement and/or at the end of the opening movement the power reserves of one or more of the drives associated with the movable platen are determined from time to time and successively reduced, until a predeterminable minimum of power reserve has been reached for this drive or these drives, wherein for a predetermined path firstly a profile of a speed set value is predetermined, and that the profile of the speed set value is altered successively according to the available power reserves, and namely in such a way that the time for covering the path is reduced successively, so that for each case of application of the closing unit of the injection-moulding machine the movement times of the movable platen are reduced as much as possible, wherein the case of application is predetermined by a particular weight of the injection-moulding tool or respectively of the mould part of the injection-moulding tool situated on the movable platen, and a particular path for this mould part.

2. The method according to Claim 1,
**characterized in that**
the minimum is close to zero, preferably less than 10% of the maximum available power, particularly preferably less than 5% of the maximum available power, or that the minimum is equal to zero.

3. The method according to Claim 1 or 2,
**characterized in that**
in each cycle the power reserves of the drive or drives are determined and are reduced successively, in particular from cycle to cycle.

4. The method according to one of the preceding claims,
**characterized in that**
during the movement of the machine part along a predetermined path, one or more physical quantities are continuously measured, which are suitable for determining the power of the drive or drives, wherein the measurement preferably takes place in short time intervals, to achieve a plurality of measurement values.

5. The method according to Claim 4,
**characterized in that**
at the end of the path, the measurement values are evaluated and a calculation of the power reserves takes place for the movement carried out along this path, and that for carrying out the movement in a later cycle, in particular in the next cycle, the power reserves are reduced or respectively a greater power is made available for moving the machine part.

6. The method according to one of the preceding claims,
**characterized in that**
the power reserves are reduced until the maximum available power of a drive is taken for moving the machine part.

7. The method according to one of the preceding claims,
**characterized in that**
one or more electric drives are used, and the current intensity I and the rotation speed n are measured.

8. The method according to one of the preceding claims,
**characterized in that**
one or more hydraulic drives are used, and the pressure in one or both cylinder chambers and the speed of travel of the piston or of the piston rod is measured.

9. The method according to one of the preceding claims,
**characterized in that**
the speed set values are altered from cycle to cycle.

10. The method according to one of the preceding claims,
**characterized in that**
the speed set value is processed to a position set value, and that a position control of the movable machine part takes place.

11. The method according to one of the preceding claims,
**characterized in that**
the power reserves of one or more drives which are associated with a movable machine part are determined when the movable machine part has reached a particular state.

12. The method according to one of the preceding claims,
**characterized in that**
a plurality of drives are associated with a movable machine part, and that the power reserves of one or more of the individual drives are determined independently of one another and successively reduced.

13. The method according to Claim 12,
**characterized in that**
for each drive the same minimum of power reserve is predetermined, or that individually for each drive its own individual minimum of power reserve is predetermined.

14. The method according to one of the preceding claims,
**characterized in that**
a plurality of drives are associated with a movable machine part, that a total is formed from the individual power reserves of several drives, and that this total is successively reduced, until a predeterminable minimum has been reached relating to this total of the power reserves.

## Revendications

1. Procédé pour faire fonctionner une machine de moulage par injection qui présente une ou plusieurs pièces de machine mobiles qui peuvent être déplacées au moyen d'entraînements appropriés le long de trajets de déplacement pouvant être prédéfinis, dans lequel le déplacement d'une pièce de machine mobile est répété de manière cyclique, dans lequel une pièce de machine mobile est la plaque de serrage de moule mobile, dans lequel une pièce moulée d'une machine de moulage par injection est prévue sur la plaque de serrage de moule mobile, et dans lequel la plaque de serrage de moule mobile avec la pièce moulée se trouvant dessus est déplacée de manière cyclique en direction de la plaque de serrage de moule fixe et en s'éloignant de celle-ci le long d'un trajet de déplacement pouvant être prédéfini,
**caractérisé en ce**
**qu'**à la fin de l'approche et/ou à la fin de l'arrivée, les réserves de puissance d'un ou de plusieurs des entraînements correspondant à la plaque de serrage de moule mobile sont calculées de temps en temps et réduites successivement jusqu'à ce qu'un minimum de réserve de puissance pouvant être prédéfini pour cet entraînement ou ces entraînements ait été atteint, dans lequel pour un trajet de déplacement prédéfini, un tracé d'une valeur nominale de vitesse est d'abord prédéfini et que le tracé de la valeur nominale de vitesse est modifié successivement en fonction des réserves de puissance disponibles, et ce de façon à ce que le temps pour parcourir le trajet de déplacement soit réduit successivement, de sorte que pour chaque cas d'application de l'unité de fermeture de la machine de moulage par injection, les temps de déplacement de la plaque de serrage de moule mobile soient réduits autant que possible, dans lequel le cas d'application est prédéfini par un poids déterminé de la machine de moulage par injection, respectivement de la pièce moulée de la machine de moulage par injection se trouvant sur la plaque de serrage de moule mobile et un trajet de déplacement déterminé pour cette pièce moulée est prédéfini.

2. Procédé selon la revendication 1, **caractérisé en ce que** le minimum est proche de zéro, de préférence inférieur à 10 % de la puissance maximale disponible, particulièrement de préférence inférieur à 5 % de la puissance maximale disponible ou bien que le minimum est égal à zéro.

3. Procédé selon la revendication 1 ou 2 , **caractérisé en ce que** dans chaque cycle, les réserves de puissance de l'entraînement ou des entraînements sont calculées et réduites successivement, en particulier de cycle en cycle.

4. Procédé selon l'une des revendications précédentes,
**caractérisé en ce que**
pendant le déplacement de la pièce de machine le long d'un trajet de déplacement prédéfini, une ou plusieurs grandeurs physiques sont mesurées de manière continue, lesquelles sont appropriées pour déterminer la puissance de l'entraînement ou des entraînement(s), dans lequel la mesure est effectuée de préférence à des intervalles de temps courts pour obtenir une pluralité de valeurs de mesure.

5. Procédé selon la revendication 4,
**caractérisé en ce**
**qu'**à la fin du trajet de déplacement, les valeurs de mesure sont évaluées et un calcul des réserves de puissance pour le mouvement exécuté le long de ce trajet de déplacement est effectué, et que pour réaliser le déplacement dans un cycle ultérieur, en particulier dans le cycle suivant, les réserves de puissance sont réduites, respectivement, une plus grande puissance est mise à disposition pour le déplacement de la pièce de machine.

6. Procédé selon l'une des revendications précédentes,
**caractérisé en ce que**
les réserves de puissance sont réduites jusqu'à ce que la puissance maximale disponible d'un entraînement soit prise pour déplacer la pièce de machine.

7. Procédé selon l'une des revendications précédentes,
**caractérisé en ce**
**qu'**un ou plusieurs entraînement(s) électrique(s) est/sont employé(s) et l'intensité du courant I ainsi que la vitesse n sont mesurés.

8. Procédé selon l'une des revendications précédentes,
**caractérisé en ce**
**qu'**un ou plusieurs entraînement(s) hydraulique(s) est/sont employé (s), et la pression dans une ou deux chambre(s) de cylindre et la vitesse de déplacement du piston ou de la tige de piston sont mesurées.

9. Procédé selon l'une des revendications précédentes,
**caractérisé en ce que**
les valeurs nominales de vitesse sont modifiées de cycle en cycle.

10. Procédé selon l'une des revendications précédentes,
**caractérisé en ce que**
la valeur nominale de vitesse est traitée en une valeur nominale de position et qu'un réglage de la position de la pièce de machine mobile est effectué.

11. Procédé selon l'une des revendications précédentes,
**caractérisé en ce que**
les réserves de puissance d'un ou de plusieurs entraînement(s) qui correspond(ent) à une pièce de machine mobile sont calculées lorsque la pièce de machine mobile a atteint un état défini.

12. Procédé selon l'une des revendications précédentes,
**caractérisé en ce que**
plusieurs entraînements correspondent à une pièce de machine mobile et que les réserves de puissance d'un ou plusieurs des différents entraînements sont calculées indépendamment l'une de l'autre et réduites successivement.

13. Procédé selon la revendication 12,
**caractérisé en ce que**
pour chaque entraînement, le même minimum de réserve de puissance est prédéfini, ou bien qu'individuellement pour chaque entraînement, un minimum individuel propre de réserve de puissance est prédéfini.

14. Procédé selon l'une des revendications précédentes,
**caractérisé en ce que**
plusieurs entraînements correspondent à une pièce de machine mobile, qu'une somme des réserves de puissance individuelles de plusieurs entraînements est formée et que cette somme est réduite successivement jusqu'à ce qu'un minimum pouvant être prédéfini, rapporté à cette somme des réserves de puissance, ait été atteint.
